# EUROPÄISCHE PATENTSCHRIFT

(11) **EP 3 042 866 B1**
(45) Veröffentlichungstag und Bekanntmachung des Hinweises auf die Patenterteilung: **20.12.2017**
(21) Anmeldenummer: 15150566.6
(22) Anmeldetag: 09.01.2015
(51) Int. Cl.: B65G 1/04, B65G 1/08

(54) **Kommissioniervorrichtung und Verfahren zum Auslagern von Stückgütern mit der Kommissioniervorrichtung**
Picking device and method for removing piece goods from storage with the picking device
Dispositif de préparation de commandes et procédé de déstockage de marchandises au détail à l'aide du dispositif de préparation de commandes

(43) Veröffentlichungstag der Anmeldung: 13.07.2016
(73) Patentinhaber: Becton Dickinson Rowa Germany GmbH, 53539 Kelberg (DE)
(72) Erfinder: Hellenbrand, Christoph, 56761 Kaifenheim (DE)
(74) Vertreter: Zenz Patentanwälte Partnerschaft mbB

(56) Entgegenhaltungen:
- EP-A1- 2 581 328
- WO-A1-03/010073
- WO-A2-2006/051329
- DE-A1- 19 815 883
- JP-A- 2006 103 876
- US-A1- 2003 185 656

## Beschreibung

Die vorliegende Erfindung betrifft eine Kommissioniervorrichtung für Stückgüter, insbesondere Arzneimittelpackungen, nach dem Oberbegriff des Anspruchs 1 sowie ein Verfahren zum Auslagern von Stückgütern mit der erfindungsgemäßen Kommissioniervorrichtung.

Automatisierte Kommissioniervorrichtungen werden häufig in Apotheken eingesetzt, um Arzneimittelpackungen platzsparend lagern zu können. Die Arzneimittelpackungen werden in den bekannten, für Apotheken geeigneten Kommissioniervorrichtungen chaotisch gelagert, d.h. die Arzneimittelpackungen werden in der Vorrichtung nicht an vorbestimmten Ablageplätzen gelagert, sondern an den Ablageplätzen, wo gerade ausreichend Platz vorhanden ist. Überflüssiges Leervolumen kann so vermieden werden, die Anzahl an gelagerten Arzneimittelpackungen pro m² Grundfläche erheblich erhöht werden. Die nach diesem System arbeitenden Kommissioniervorrichtungen umfassen ein komplexes Lagersystem, welches u.a. für die Zuweisung eines optimalen Ablageplatzes zuständig ist. Entsprechend arbeitende Kommissioniervorrichtungen sind aber für Arzneimittelverteilzentren oder Großapotheken mit einer sehr hohen Ausgabefrequenz (d.h. Arzneimittelpackungen pro Zeiteinheit) ungeeignet, da die chaotisch gelagerten Arzneimittelpackungen nicht rasch genug ausgegeben werden können.

Bei sehr hohen Ausgabefrequenzen werden daher Kommissioniervorrichtungen mit sogenannten Schachtsystemen verwendet, in denen die Arzneimittel sortenrein gelagert werden. Jeder Lagerschacht umfasst an seinem unteren Ende eine von einer Steuereinrichtung ansteuerbare Sperre, mit der eine oder mehrere Arzneimittelpackungen aus dem Lagerschacht ausgelagert werden können. Die Anzahl unterschiedlicher Arzneimittel, die mit einer Kommissioniervorrichtung mit sortenreinen Lagerschächten gelagert werden können, entspricht im Höchstfall der Anzahl der sortenreinen Lagerschächte. Eine entsprechende Kommissioniervorrichtung ist beispielsweise in der DE 198 15 883 A1 offenbart.

Der Nachteil der mit Lagerschächten arbeitenden Kommissioniervorrichtungen ist aber, dass in diesen keine Arzneimittelpackungen lagerbar sind, die, beispielsweise formbedingt oder weil eine Kühlung erforderlich ist, nicht in einem Lagerschacht lagerbar sind oder nur derart selten ausgegeben werden, dass eine Lagerung in einem sortenrein betriebenen Lagerschacht nicht sinnvoll ist.

Die WO 03/010073 A1 offenbart eine Kommissioniervorrichtung nach dem Oberbegriff des Anspruchs 1 für eine rechnergesteuerte Ein- und Auslagerung von Arzneimittelpackungen, wobei in der Vorrichtung Langsam- und Schnelldreher ein- und ausgelagert werden können. Da für die Lagerung der Langsamdreher ein ganz erheblicher Teil der Lagerkapazität der Vorrichtung verbraucht wird ist die Lagerkapazität für Schnelldreher stark vermindert.

Es ist die Aufgabe der vorliegenden Erfindung eine mit Lagerschächten arbeitende Kommissioniervorrichtung mit erhöhter Lagerkapazität für in den Lagerschächten zu lagernden Arzneimittelpackungen bereitzustellen, in welcher auch Arzneimittelpackungen gelagert und ausgegeben werden können, die lagerschachtinkompatibel sind oder deren Ausgabefrequenz wesentlich geringer ist als die der in den Lagerschächten gelagerten Arzneimittelpackungen.

Diese Aufgabe wird gelöst durch eine Kommissioniervorrichtung gemäß Anspruch 1. Die erfindungsgemäße Kommissioniervorrichtung umfasst zumindest eine erste Regalreihe mit mindestens einem ersten Regal mit einer Mehrzahl von übereinander angeordneten, sich jeweils in einer horizontalen Ebene erstreckenden Regalböden, und zumindest eine zweite Regalreihe mit mindestens einem zweiten Regal mit einer Mehrzahl von übereinander angeordneten, sich jeweils in einer geneigten Ebene erstreckenden Regalböden. Umfasst die Kommissioniervorrichtung mehrere Regale pro Regalreihe, so können diese alle gleich aufgebaut sein, es ist aber auch möglich, dass unterschiedliche Regale mit beispielsweise unterschiedlich beabstandeten Regalböden verbaut sind.

Zwischen der ersten und der zweiten Regalreihe ist eine Gasse ausgebildet, in der ein Bediengerät horizontal und vertikal an einer entsprechenden Führung verfahrbar ist. Die Gasse wird dabei von den Stirnseiten (Ladekanten) der Regalböden definiert, wobei diese Stirnseiten pro Regalreihe üblicherweise in einer senkrechten Ebene angeordnet sind, so dass die Ebenen von gegenüberliegenden Regalreihen parallel zueinander verlaufen.

Die erfindungsgemäße Kommissioniervorrichtung umfasst ferner zumindest eine Einlagerungseinrichtung, mit welcher Stückgüter in die Kommissioniervorrichtung bewegt werden und von welcher das Bediengerät Stückgüter entnehmen kann, zumindest eine Auslagerungseinrichtung, über welche Stückgüter aus u.a. der zweiten Regalreihe ausgelagert werden können, und zumindest eine Hilfs-Auslagerungseinrichtung, über welche von dem Bediengerät aufgenommene Stückgüter entlang eines Hilfs-Auslagerungspfads ausgelagert werden können, wobei auf jedem Regalboden der zweiten Regalreihe mehrere parallele Lagerschächte ausgebildet sind, die an ihren Enden jeweils eine Sperre zum Halten und Freigeben von in dem Lagerschacht liegenden Stückgütern aufweisen und aus welchen Stückgüter entlang eines Haupt-Auslagerungspfades über die Auslagerungseinrichtung ausgelagert werden können.

Das Bediengerät der erfindungsgemäßen Kommissioniervorrichtung umfasst eine Greifvorrichtung zum Ein- und/oder Auslagern von Stückgütern auf die bzw. von den horizontalen Regalböden und Einfüllen von Stückgütern in die Lagerschächte oder Zuführen auf die Hilfs-Auslagerungseinrichtung sowie eine mit dem Bediengerät gekoppelte Steuereinrichtung, die das Bediengerät zum Einlagern und Auslagern von Stückgütern ansteuert. Erfindungsgemäß ist das Steuergerät derart ausgebildet, dass das Bediengerät zum Auslagern von hintereinander liegenden gleichartigen Stückgütern von den horizontalen Regalböden und Einlagern dieser Stückgüter in den geneigten Lagerschächten und zum Auslagern von einem oder mehreren auf den horizontalen Regalböden angeordneten Stückgütern und Übergeben dieser Stückgüter an die Hilfs-Auslagerungseinrichtung ansteuerbar ist.

Bei der erfindungsgemäßen Kommissioniervorrichtung werden also zwei Arten von Lagerplätzen kombiniert, einmal die Lagerschächte der zweiten Lagerregalreihe sowie die horizontalen Regalböden der ersten Regalreihen. In den Lagerschächten werden Arzneimittelpackungen mit hoher Ausgabefrequenz sortenrein gelagert. Auf den horizontalen Regalböden kann ein Übervorrat der in Lagerschächten zu lagernden Arzneimittelpackungen angelegt werden (d.h. ein Vorrat zusätzlich zu den in den Lagerschächten befindlichen Stückgütern), oder es können solche Arzneimittelpackungen auf den horizontalen Regalböden abgelegt werden, die nicht in Lagerschächten lagerbar oder über diese auslagerbar sind. Ferner können auf den horizontalen Regalböden solche Arzneimittelpackungen angeordnet bzw. gelagert werden, deren Ausgabefrequenz zu gering ist, um sie in den Lagerschächten zu lagern, deren Gewicht zu groß ist oder für die, bezogen auf die Abmaße, kein Lagerschacht frei ist.

Die Stückgüter mit hoher Ausgabefrequenz werden über die Lagerschächte ausgelagert. Damit aber auch eine Möglichkeit besteht, die nicht über Lagerschächte auslagerbaren Stückgüter bzw. solche, die aufgrund der geringen Ausgabefrequenz nicht in einem geneigten Lagerschacht gelagert sind, auslagern zu können, umfasst die erfindungsgemäße Vorrichtung eine Hilfs-Auslagerungseinrichtung, welcher die vorgenannten Stückgüter mit dem Bediengerät zugeführt werden können. Über diese Hilfs-Auslagerungseinrichtung werden die Stückgüter dann entlang eines Hilfs-Auslagerungspfades aus der Kommissioniervorrichtung herausbewegt.

Die erfindungsgemäße Kommissioniervorrichtung ermöglicht es also, dass in einer einzigen Kommissioniervorrichtung sowohl Stückgüter (Arzneimittelpackungen) mit hoher Ausgabefrequenz (in Lagerschächten), als auch Stückgüter mit geringer Ausgabefrequenz oder solche, die nicht über die geneigten Lagerschächte ausgelagert werden können, zusammen gelagert und ausgelagert werden können, ohne dass die Ausgabegeschwindigkeit der Kommissioniervorrichtung vermindert ist. Stückgüter mit hoher Ausgabefrequenz können über die Lagerschächte, die jeweils mit einer Sperre versehen sind, ausgelagert werden, parallel dazu können mit Hilfe des Bediengerätes die auf den horizontalen Regalböden gelagerten Stückgüter über die Hilfs-Auslagerungseinrichtung ausgelagert werden.

Stückgüter, die in den Schächten gelagert werden (und ggf. als Übervorrat auf den horizontalen Regalböden), werden hier als "Schachtgüter" bezeichnet, Stückgüter, die aufgrund der oben genannten Bedingungen auf einem horizontalen Regalboden gelagert werden als "Regalgüter". Die vorliegende Erfindung wird primär im Hinblick auf Arzneimittelpackungen beschrieben. Mit der erfindungsgemäßen Kommissioniervorrichtung können aber auch andersartige Stückgüter verarbeitet werden.

Die Stückgüter werden aus den Lagerschächten ausgelagert, indem die Sperre gelöst wird und die Stückgüter mit einer entsprechenden, dem Lagerschacht zugeordneten Einrichtung aus dem Schacht bewegt werden (wenn dieser beispielsweise horizontal ausgebildet ist).

Bei einer bevorzugten Ausführungsform der Kommissioniervorrichtung sind die Regalböden der zweiten Regalreihe von der Gasse weg abfallend geneigt ausgebildet, d.h. die Lagerschächte sind als geneigte Lagerschächte ausgebildet. Dies ermöglicht es, dass Stückgüter ausgelagert werden, indem schlicht die einem Lagerschacht zugeordnete Sperre geöffnet wird. Das Stückgut fällt aufgrund der Neigung des Lagerschachtes schwerkraftbedingt aus dem Lagerschacht und auf die Auslagerungseinrichtung. Bei anderen Ausführungsformen können bei der zweiten Regalreihe Regale mit horizontalen Regalböden und Regale mit geneigten Regalböden kombiniert werden.

Wie bereits angemerkt, ist zwischen der ersten und der zweiten Regalreihe eine Gasse ausgebildet, in der das Bediengerät an einer entsprechenden Führung horizontal und vertikal verfahrbar ist. Um Stückgüter besonders einfach und rasch von den horizontalen Regalböden in die (geneigten) Lagerschächte bewegen zu können, sprich Stückgüter aus dem Übervorrat zu den Lagerorten zu bewegen, von welchen sie letztendlich ausgelagert werden, ist es bei einer bevorzugten Ausführungsform vorgesehen, dass die Greifvorrichtung des Bediengerätes eine horizontale Auflagefläche mit einander entgegengesetzten Ladekanten, einen Greifer zum Ein- und Auslagern von Stückgütern auf die bzw. von den horizontalen Regalböden und eine Schiebeeinrichtung zum Schieben von Stückgütern auf der Auflagefläche aufweist, wobei zwischen den Ladekanten ein Transportweg für Stückgüter gebildet ist, und wobei die Auflagefläche die gesamte Breite der Gasse überspannt, so dass die Ladekanten der Auflagefläche derart an Ladekanten der horizontalen Regalböden bzw. der Schächte ausgerichtet sind, dass Stückgüter ohne ein Verfahren der Auflagefläche auf oder von den horizontalen Regalböden bzw. von der Auflagefläche in die Schächte bewegbar sind. Dies wird erreicht, indem die Breite der Auflagefläche an der Breite der Gasse ausgerichtet wird, d.h. der Abstand zwischen den Ladekanten der Auflagefläche und den Stirnseiten / Ladekanten der Regalreihen so gering gehalten wird, das sich keine Stückgüter in der Lücke zwischen den Ladekanten verkeilen können, eine Bewegung des Bediengerätes in der Gasse aber problemlos möglich ist (wobei zu berücksichtigen ist, dass ggf. einzelne Regalböden geringfügig weiter in die Gasse ragen als andere).

Bei der erfindungsgemäßen Ausführungsform ist es also nicht notwendig, dass die Greifvorrichtung nach dem Bewegen der Stückgüter auf die Auflagefläche um eine horizontale Drehachse gedreht wird, um die Stückgüter über dieselbe Ladekante den Lagerschächten zuzuführen. Die erfindungsgemäße Ausführungsform erlaubt es, dass Stückgüter, nachdem sie mittels des Greifers auf die Auflagefläche bewegt wurden, über die Schiebeeinrichtung in die Schächte bewegt werden, wozu erfindungsgemäß ein Transportweg zwischen den Ladekanten der Auflagefläche vorgesehen ist. Die erfindungsgemäße Ausführungsform ermöglicht es damit, dass Stückgüter besonders rasch von den horizontalen Regalböden den Lagerschächten oder der Hilfs-Auslagerungseinrichtung zugeführt werden.

Gelegentlich kann es auch gewünscht sein, dass auf den horizontalen Regalböden gelagerte Stückgüter, die als Übervorrat für in den Lagerschächten gelagerten Stückgüter vorgesehen sind, umgelagert werden sollen, beispielsweise um diese näher an den Lagerschacht zu bewegen, über welchen sie schließlich ausgelagert werden. Um das Bewegen von Stückgütern von der Auflagefläche auf die horizontalen Regalböden zu unterstützen, ist es bei einer bevorzugten Ausführungsform vorgesehen, dass die Schiebeeinrichtung zwei Schiebemittel umfasst, mit welchen Stückgütern in entgegengesetzten Richtungen von der Auflagefläche bewegt werden können, d. h. zum einen in die Lagerschächte und zum anderen auf die horizontalen Regalböden.

Bei einer konstruktiv besonders einfachen Ausführungsform ist es vorgesehen, dass die Schiebemittel der Greifvorrichtung in einer Ausnehmung der Auflagefläche und unter diese bewegbar sind. Bei dieser bevorzugten Ausführungsform sind die Schiebemittel an einer Stelle der Greifvorrichtung angeordnet und bewegbar, die ansonsten frei von weiteren Bauteilen ist. Bei den Seitenflächen der Auflagefläche ist üblicherweise der Greifer (sofern dieser als Backengreifer ausgebildet ist) angeordnet, so dass mit der erfindungsgemäßen Ausführungsform eine günstige Verteilung der einzelnen Bauteile der Greifvorrichtung erzielt ist.

Mit Hilfe der Schiebemittel werden auf der Auflagefläche angeordnete Stückgüter u. a. den Lagerschächten zugeführt, in welchen sie, bei geneigten Lagerschächten, schwerkraftbedingt bis zu der Sperre oder einem bereits in dem Lagerschacht angeordneten Stückgut rutschen. Um insbesondere bei besonders kleinen und/oder leichten Stückgütern zu gewährleisten, dass diese schwerkraftbedingt in die geneigten Lagerschächte rutschen, ist es bei einer bevorzugten Ausführungsform vorgesehen, dass ein Schiebemittel einen Schiebefinger aufweist, welcher über eine Ladekante bewegt werden kann. Damit ist es beim Bewegen eines Stückgutes von der Auflagefläche in einen geneigten Lagerschacht sichergestellt, dass der Schwerpunkt des Stückgutes über die Ladekante hinaus bewegt wird, so dass gewährleistet ist, dass das Stückgut den geneigten Lagerschacht herabrutscht.

Damit Stückgüter mit unterschiedlichen Abmessungen gelagert werden können, ist es bei einer bevorzugten Ausführungsform vorgesehen, dass die geneigten Regalböden der zweiten Regelreihe derart angeordnet sind, dass Lagerschächte unterschiedlicher Höhe ausgebildet sind.

Über die Hilfs-Auslagerungseinrichtung werden solche Stückgüter ausgelagert, die entweder (beispielsweise aufgrund ihrer Form) nicht über einen geneigten Lagerschacht ausgelagert werden können, oder deren Ausgabefrequenz so gering ist, dass ein Lagern in einem Lagerschacht nicht sinnvoll ist. Die Hilfs-Auslagerungseinrichtung kann beispielsweise neben der zweiten Regalreihe als Rutsche ausgebildet sein, über welche Stückgüter von dem Bediengerät auf die eigentliche Auslagerungseinrichtung oder aus der Kommissioniervorrichtung geführt werden. Um den konstruktiven Aufwand für die Hilfs-Auslagerungseinrichtung jedoch möglichst gering zu halten, ist es bei einer bevorzugten Ausführungsform vorgesehen, dass die Hilfs-Auslagerungseinrichtung auf einem Regalboden der zweiten Regelreihe ausgebildet ist. Bei dieser bevorzugten Ausführungsform ist also ein Teil eines Regalbodens nicht als Lagerschacht vorgesehen, sondern in diesem Bereich ist die Hilfs-Auslagerungseinrichtung ausgebildet. Bei dieser Ausführungsform wird die Hilfs-Auslagerungseinrichtung also nicht durch ein eigenständiges Bauteil, sondern mit vorhandenen Bauteilen realisiert. In diesem Zusammenhang ist es bei einer besonders bevorzugten Ausführungsform vorgesehen, dass die Hilfs-Auslagerungseinrichtung als geneigter Lagerschacht ohne Sperre ausgebildet ist.

Die Aufgabe der vorliegenden Erfindung wird ferner gelöst durch ein Verfahren gemäß Patentanspruch 10. Erfindungsgemäß wird in Reaktion auf eine Auslageranforderung (eine Anforderung eine bestimmte Anzahl von Stückgütern auszulagern) für ein oder mehrere Stückgüter von der Steuereinrichtung der Kommissioniervorrichtung ermittelt, ob es sich bei dem zumindest einen auszulagernden Stückgut um ein Schachtgut oder ein Regalgut handelt. Die Auslageranforderung kann der Steuereinrichtung auf einem dem Fachmann bekannten Wege übermittelt werden, beispielsweise über eine kabelgebundene oder kabellose Netzwerkverbindung.

Nachdem ermittelt ist, ob es sich bei dem zumindest einem auszulagernden Stückgut um ein Schachtgut oder ein Regalgut handelt, wird für den Fall, dass es sich um ein Regalgut handelt, eine der Auslageranforderung entsprechende Anzahl von Stückgütern mit dem Bediengerät ergriffen und der Hilfs-Auslagerungseinrichtung übergeben. Dazu wird die entsprechende Anzahl von Stückgütern mit dem Greifer des Bediengerätes auf die Auflagefläche bewegt und im Anschluss der Hilfs-Auslagerungseinrichtung übergeben, über welche die Stückgüter, ggf. über die eigentliche Auslagerungseinrichtung der Kommissioniervorrichtung, ausgelagert werden. Alternativ kann die Kommissioniervorrichtung auch so gestaltet sein, dass die Hilfs-Auslagerungseinrichtung bei einer Entnahmestelle endet, d. h. die Auslagerung ohne Zwischenschaltung der eigentlichen Auslagerungseinrichtung erfolgt. Entsprechend der Auslageranforderung können lediglich ein Stückgut oder mehrere Stückgüter (in diesem Falle Regalgüter) ausgelagert werden, wobei dies in Abhängigkeit von der genauen Ausgestaltung der Kommissioniervorrichtung nacheinander oder parallel (bei mehreren Bediengeräten) erfolgen kann, wobei bei lediglich einem Bediengerät entweder jedes Stückgut einzeln ausgelagert wird oder zunächst sämtliche Stückgüter auf die Auflagefläche bewegt werden (ggf. von unterschiedlichen horizontalen Regalböden) und dann zusammen von der Auflagefläche an die Hilfs-Auslagerungseinrichtung übergeben werden.

Handelt es sich bei den auszulagernden Stückgütern um Schachtgüter, also solche Stückgüter, die üblicherweise in den Lagerschächten gelagert werden, wird erfindungsgemäß zunächst ermittelt, ob eine der Auslageranforderung entsprechende Anzahl von Stückgütern in den Lagerschächten gelagert ist. Ist dies der Fall, wird eine der Auslageranforderung entsprechende Anzahl von Stückgütern durch Betätigung der Sperre bzw. der Sperren des bzw. derjenigen Lagerschächte, in dem bzw. in denen die Stückgüter gelagert sind, und ggf. Betätigung einer entsprechenden Einrichtung zum Bewegen der Stückgüter aus dem Lagerschacht, auf die Auslagerungseinrichtung ausgelagert und über diese aus der Vorrichtung bewegt.

Für den Fall, dass eine der Auslageranforderung entsprechende Anzahl von Stückgütern nicht in den Lagerschächten gelagert ist, wird eine Mehrzahl von auf den horizontalen Regalböden gelagerten Stückgütern (des Übervorrats) mit dem Bediengerät ergriffen und eine der Auslageranforderung entsprechende Anzahl von Stückgütern ausgelagert.

Bei der Mehrzahl von Stückgütern kann es sich genau um die Anzahl der angeforderten Stückgüter handeln, die dann ausgelagert werden. Es können jedoch auch mehr als die angeforderten Stückgüter aus dem Übervorrat entnommen werden. Die angeforderten Stückgüter werden ausgelagert, die überzähligen Stückgüter werden für nachfolgende Auslageranforderungen in den Lagerschacht bewegt.

Es kann auch vorkommen, dass die angeforderte Anzahl von Stückgütern lediglich zum Teil in den Lagerschächten gelagert ist, und in diesem Falle kann der Anteil der angeforderten Stückgüter, die noch in den Lagerschächten angeordnet sind, über diese ausgelagert werden, und der verbleibende Teil kann von den horizontalen Regalböden entnommen und ausgelagert werden.

Die nicht in den Lagerschächten gelagerten Stückgüter werden ausgelagert, indem das Bediengerät zu der Hilfs-Auslagerungseinrichtung bewegt wird und eine der Auslageranforderung entsprechende Anzahl Stückgüter an die Hilfs-Auslagerungseinrichtung übergeben und ausgelagert wird.

Alternativ werden die nicht in den Lagerschächten gelagerten Stückgüter ausgelagert, indem das Bediengerät zu einem Lagerschacht bewegt wird, sämtliche Stückgüter in den Lagerschacht übergeben werden und die Sperre des geneigten Lagerschachten derart betätigt wird, dass eine der Auslageranforderung entsprechende Anzahl an Stückgütern auf die Auslagerungseinrichtung ausgelagert werden kann (schwerkraftbedingt bei geneigten Lagerschächten oder mit einer entsprechenden Einrichtung bei horizontalen Lagerschächten). Ferner ist es denkbar, dass für den Fall, dass in den Lagerschächten keine der Auslageranforderung entsprechende Anzahl von Stückgütern gelagert ist, eine Mehrzahl von der Auslageranforderung entsprechenden Stückgütern mit dem Bediengerät von den horizontalen Regalböden (von dem Übervorrat) entnommen wird, eine der Auslageranforderung entsprechende Anzahl von Stückgütern ausgelagert wird (über die Hilfs-Auslagerungseinrichtung oder über die Lagerschächte) und die noch auf der Auflagefläche der Greifvorrichtung befindlichen Stückgüter in einen geneigten Lagerschacht bewegt werden. In diesem Fall werden also zum einen die angeforderten Stückgüter ausgegeben und zusätzlich weitere Stückgüter in einem geneigten Lagerplatz angeordnet.

Die Einlagerungseinrichtung ist so konzipiert, dass zur Befüllung der Lagerschächte mehrere gleiche Stückgüter nebeneinander auf der Einlagerungseinrichtung angeordnet werden können, sprich die Einlagerungseinrichtung ist deutlich breiter als ein übliches Stückgut (5 - 8 mal die Breite eines üblichen Stückgutes). Alternativ können die Stückgüter auch einzeln auf der Einlagerungseinrichtung abgelegt werden, und zwar insbesondere dann, wenn Regalgüter einzulagern sind.

Im Nachfolgenden werden die erfindungsgemäße Vorrichtung sowie das erfindungsgemäße Verfahren unter Bezugnahme auf die beigefügte Zeichnung näher beschrieben, wobei:
Figur 1 eine perspektivische Ansicht einer ersten Ausführungsform der erfindungsgemäßen Kommissioniervorrichtung zeigt;
Figur 2 eine Schnittansicht der in Figur 1 gezeigten Ausführungsform zeigt;
Figur 3 eine weitere perspektivische Ansicht der Ausführungsform zeigt;
Figur 4 eine Hinteransicht der Ausführungsform zeigt;
Figur 5 eine Vorderansicht der Ausführungsform zeigt;
Figur 6 eine Seitenansicht der Ausführungsform zeigt;
Figur 7 eine Detailansicht der Greifvorrichtung des Bediengerätes zeigt;
Figur 8 eine weitere Detailansicht der Greifvorrichtung zeigt;
Figur 9 eine Detailansicht von unteren Bereichen von geneigten Lagerschächten zeigt;
Figur 10 eine perspektivische Ansicht einer zweiten Ausführungsform der erfindungsgemäßen Kommissioniervorrichtung zeigt;
Figur 11 eine Detailansicht der zweiten Ausführungsform im Bereich der Lagerschächte zeigt; und
Figuren 12a, 12b - 15a, 15b schematische Ansichten einer erfindungsgemäßen Kommissioniervorrichtung darstellen, mit denen verschiedene Ausführungsformen des erfindungsgemäßen Verfahren erläutert werden.

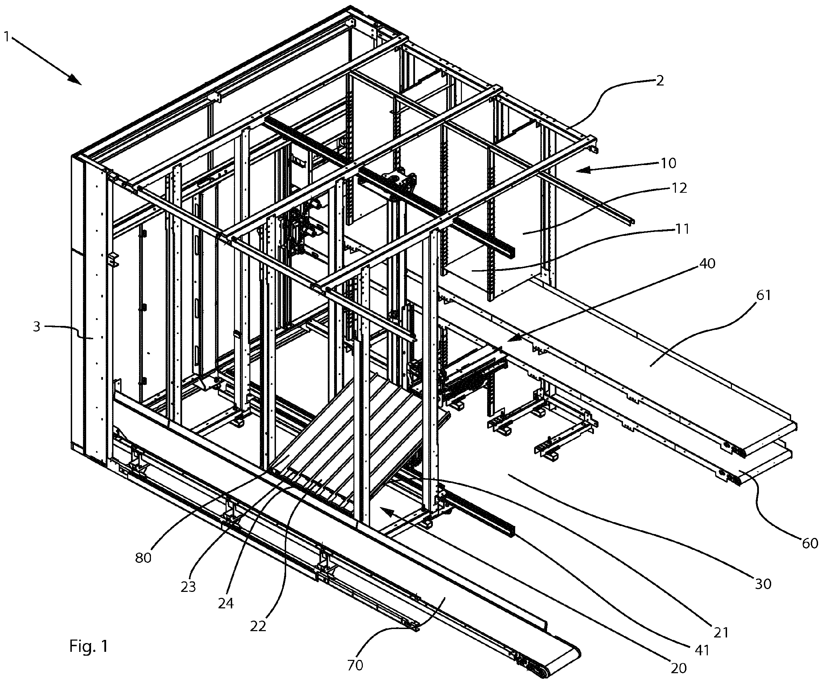

Figur 1 zeigt eine perspektivische Ansicht einer erfindungsgemäßen Kommissioniervorrichtung 1, wobei ein Teil der für die Erfindung unwesentlichen Elemente der
Kommissioniervorrichtung, wie beispielsweise ein Großteil der Gerüststruktur 2 sowie ein Großteil der Außenverkleidung 3, fortgelassen ist. Die Kommissioniervorrichtung 1 umfasst eine erste Regalreihe 10 mit mehreren Regalen, die jeweils eine Mehrzahl von übereinander angeordneten, sich in einer horizontalen Ebene erstreckenden Regalböden 11 aufweisen (wobei in Figur 1 lediglich ein Regalboden 11 angedeutet ist; weitere Regalböden sind über dem dargestellten Regalboden angeordnet). Die einzelnen Regale der ersten Regalreihe 10 sind durch Regalwände 12 und eine Mehrzahl der vorgenannten Regalböden 11 gebildet. Bei der gezeigten Ausführungsform sind alle Stirnkanten (Ladekanten) der Regalböden in einer vertikalen Ebene angeordnet, sprich alle Regalböden ragen gleich weit in die Kommissioniervorrichtung hinein.

Die in Figur 1 gezeigte Ausführungsform der erfindungsgemäßen Kommissioniervorrichtung umfasst zwei Einlagerungseinrichtungen 60, 61, die bei dieser Ausführungsform als Förderbänder ausgebildet sind und in die erste Regalreihe integriert sind, d. h. über und unter den beiden Einlagerungseinrichtungen 60, 61 sind Regale mit horizontalen Regalböden 11 vorgesehen. Die Einlagerungseinrichtungen sind so angeordnet und dimensioniert (sprich so breit), dass sie mit der oben genannten vertikalen Ebene abschließen. Eine entsprechende Anordnung der Einlagerungseinrichtungen und der Regalböden macht ein Entnehmen von Stückgütern von den Einlagerungseinrichtungen und das Ablegen der Stückgüter auf den Regalböden besonders einfach.

Gegenüber der erste Regalreihe 10 ist eine zweite Regalreihe 20 angeordnet, die eine Mehrzahl von Regalen mit geneigten Regalböden 21 aufweist, wobei bei der gezeigten Ausführungsform der Einfachheit halber lediglich ein geneigter Regalboden 21 dargestellt ist. Auch die in die Kommissioniervorrichtung gewandten Stirnkanten (Ladekanten) der geneigten Regalböden enden bei der gezeigten Ausführungsform in einer vertikalen Ebene, wobei diese Ebene parallel zu der durch die Stirnkanten der horizontalen Regalböden definierten Ebene verläuft.

Auf jedem Regalboden 21 ist eine Mehrzahl von Lagerschächten 22 ausgebildet, die bei ihrem unteren Ende 24 jeweils eine (mit einer in Figur 1 nicht dargestellten Steuereinrichtung gekoppelte) Sperre 23 zum Halten und Freigeben von in dem Lagerschacht 22 liegenden Stückgütern aufweisen. Unterhalb der geneigten Regalböden ist eine Auslagerungseinrichtung 70 angeordnet, auf welche die in den geneigten Lagerschächten angeordneten Stückgüter bei Betätigung der Sperren der geneigten Lagerschächte fallen und über welche die angeforderten Stückgüter aus der Kommissioniervorrichtung bewegt werden. Bei der in Figur 1 gezeigten Ausführungsform ist auch die Auslagerungseinrichtung 70 als Förderband ausgebildet.

Zwischen der ersten und der zweiten Regalreihe 10, 20 ist eine Gasse 30 ausgebildet, deren Breite durch den Abstand der beiden vertikalen Ebenen definiert ist und in welche ein Bediengerät 40 horizontal und vertikal an einer entsprechenden Führung verfahrbar ist, wobei in Figur 1 insbesondere die Horizontalführung 41 des Bediengerätes 40 zu erkennen ist.

Die erfindungsgemäße Kommissioniervorrichtung 1 umfasst ferner eine Hilfs-Auslagerungseinrichtung 80, über welche insbesondere solche Stückgüter ausgelagert werden können, die nicht in den geneigten Lagerschächten gelagert sind, da sie entweder, beispielsweise formbedingt, in diesen Schächten nicht lagerfähig sind oder derart selten ausgegeben bzw. angefragt werden, dass eine Einlagerung dieser Stückgüter in den geneigten Lagerschächten nicht sinnvoll ist, da diese besser mit häufiger angefragten Stückgüter belegt werden können. Die Hilfs-Auslagerungseinrichtung 80 ist bei der gezeigten Ausführungsform auf einem geneigten Regalboden 21 ausgebildet, und zwar als Lagerschacht, bei dessen unterem Ende keine Sperre vorgesehen ist. Soll ein Stückgut über die Hilfs-Auslagerungseinrichtung 80 ausgelagert werden, wird dieses von dem Bediengerät 40 (welches weiter unten detaillierter beschrieben ist) von einem horizontalen Regalboden 11 entnommen und der Hilfs-Auslagerungseinrichtung 80 zugeführt, über welche das Stückgut auf die Auslagerungseinrichtung 70 rutscht. Bei alternativen Ausführungsformen kann die Hilfs-Auslagerungseinrichtung auch als "eigenständiges" Bauteil beispielsweise neben der zweiten Regalreihe angeordnet sein. Dies kann dann erforderlich sein, wenn Stückgüter mit Abmessungen gelagert und über die Hilfs-Auslagerungseinrichtung ausgegeben werden sollen, die bedingt durch die Anordnung der geneigten Regalböden nicht zwischen diesen ausgelagert werden können.

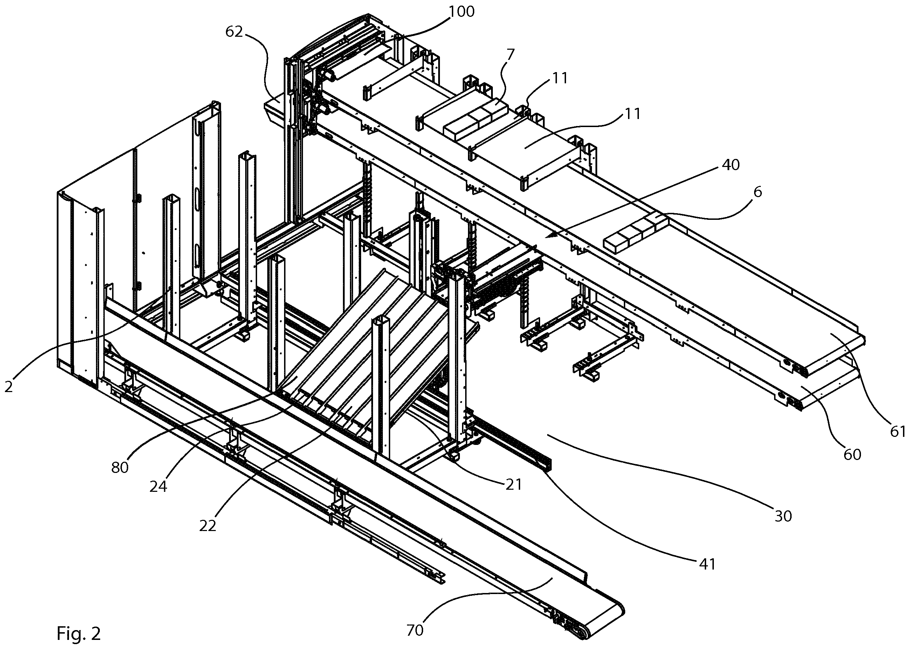

Figur 2 zeigt eine Schnittansicht der in Figur 1 gezeigten Ausführungsform, bei welcher die obere Hälfte der Kommissioniervorrichtung fortgelassen ist. Man erkennt bei dieser Schnittansicht insbesondere die Anordnung der horizontalen Regalböden 11 der ersten Regalreihe. Ferner wird deutlich, dass die Stirnseiten der horizontalen Regalböden 11 und die Seiten der Auslagerungseinrichtungen 60, 61 alle in einer Ebene liegen. Wie bei dieser Ansicht zu erkennen ist, ist jeder Auslagerungseinrichtung 60, 61 eine Identifikationseinrichtung 100 zugeordnet, mit welcher Daten der auf der Einlagerungseinrichtung aufliegenden Stückgüter ermittelt werden können (Abmessung der Stückgüter, Identifizierung der Stückgüter, Anzahl der Stückgüter usw.). Ferner ist zu erkennen, dass jede Einlagerungseinrichtung 61, 60 einen äußeren Bereich 62 aufweist, der über die Vorderfront der Kommissioniervorrichtung hervorsteht und auf welchem die einzulagernden Stückgüter für die Einlagerung abgelegt werden, wobei dabei regelmäßig so vorgegangen wird, dass eine Mehrzahl von gleichen Stückgütern angeordnet wird. Diese werden mit der Einlagerungseinrichtung in die Kommissioniervorrichtung bewegt, wo sie mit dem Bediengerät, sofern es sich um die gleichen Stückgüter handelt, zusammen von der Einlagerungseinrichtung entnommen und einem geneigten Lagerschacht oder einem horizontalen Regallager 11 zugeführt werden.

Lediglich beispielhaft sind bei dieser Figur einige Stückgüter dargestellt. Auf einer der horizontalen Regalböden sind mehrere Stückgüter 7 des Regaltyps angeordnet, auf der oberen Einlagerungseinrichtung sind vier Stückgüter 6 des Schachttyps angedeutet. Hier ist auch zu erkenne, wie insbesondere die Schachtgüter auf die Einlagerungseinrichtung vorteilhafterweise aufgelegt werden, nämlich sortenrein hintereinander, so dass alle vier Stückgüter gleichzeitig vom Bediengerät ergriffen und zu dem vorbestimmten geneigten Lagerschacht bewegt werden können.

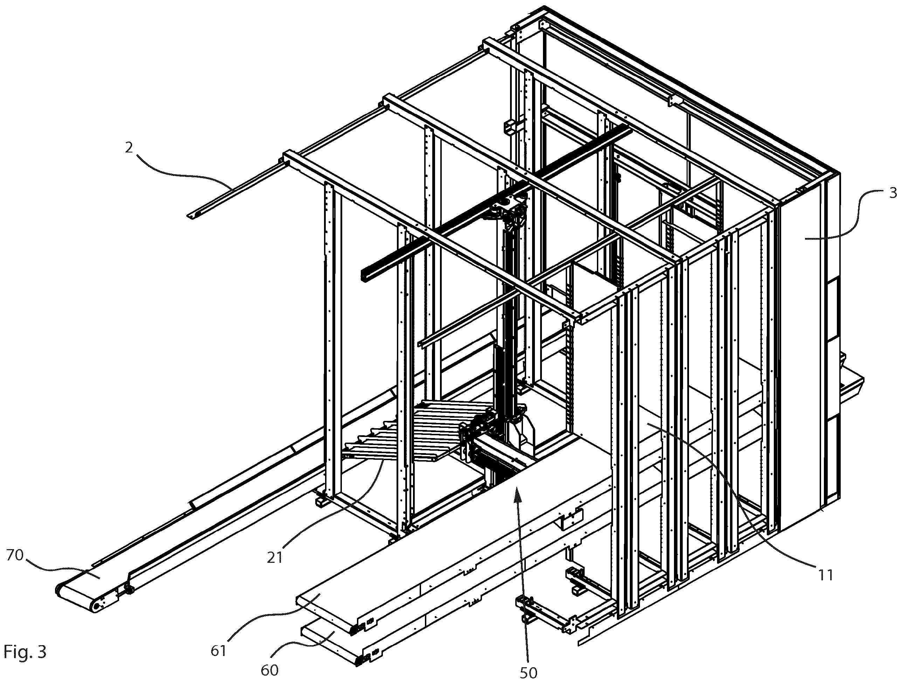

Figur 3 zeigt eine alternative perspektivische Ansicht der bereits in Figur 1 gezeigten Ausführungsform, wobei diese Ansicht die Kommissioniervorrichtung von einer anderen Seite zeigt. Ansonsten bestehen keine Unterschiede zwischen den Ansichten gemäß Figur 1 und 3.

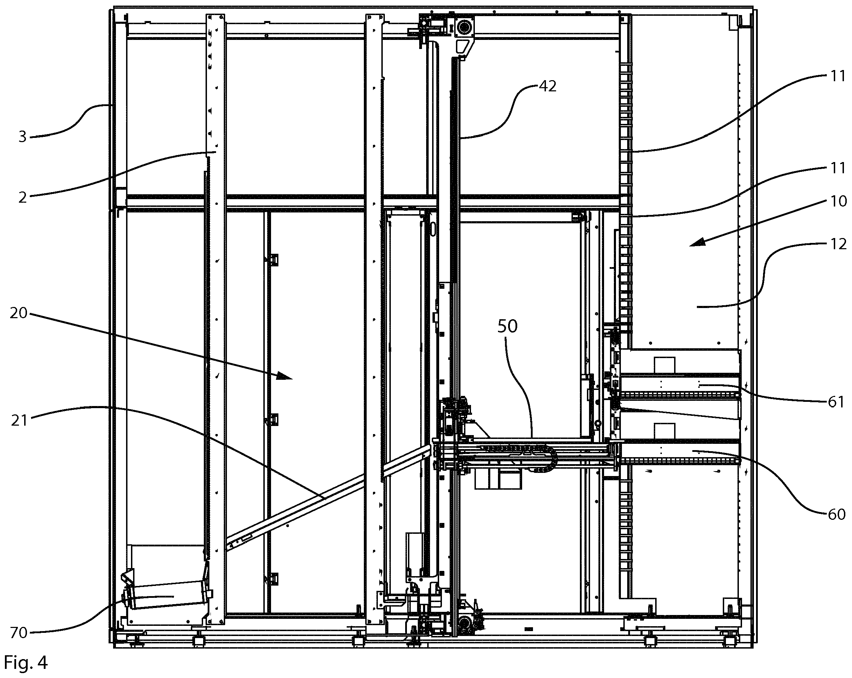

Figur 4 zeigt eine Hinteransicht der Ausführungsform der erfindungsgemäßen Kommissioniervorrichtung, wobei aufgrund der fortgelassenen Außenverkleidung die Kommissioniervorrichtung von innen zu erkennen ist. Es sind die beiden gegenüber angeordneten Regalreihen 10, 20 zu erkennen, wobei bei der zweiten Regalreihe 20 der Übersicht halber lediglich ein Regalboden 21 dargestellt ist. Zwischen der ersten und der zweiten Regalreihe ist die Gasse 30 ausgebildet, in welcher das Bediengerät 40 horizontal und vertikal verfahrbar ist, wobei bei dieser Figur insbesondere die vertikale Führung 42 für das Bediengerät zu erkennen ist. Das Bediengerät 40 umfasst u.a. eine Greifvorrichtung 50, die, wie dies bei der Hinteransicht gut zu erkennen ist, die Gasse 30 vollständig überspannt und so den Abstand zwischen der ersten Regalreihe und der zweiten Regalreihe überbrücken kann (wobei natürlich die Bewegungsfreiheit in der Gasse gewährleistet bleibt). Wie bei dieser Darstellung gut zu erkennen ist, sind die geneigten Regalböden 21 der zweiten Regalreihe 20 von der Gasse weg nach außen hin zu der Auslagerungseinrichtung 70 geneigt. Bei dieser Darstellung ist ebenfalls gut zu erkennen, dass mit der Greifvorrichtung 50 auf die beiden Einlagerungseinrichtungen 60 und 61 zugegriffen werden kann. Die horizontalen Regalböden 11 und die Einlagerungseinrichtungen 60, 61 erstrecken sich bis zu der gemeinsamen vertikalen Ebene. Gleiches gilt für die geneigten Regalböden 21.

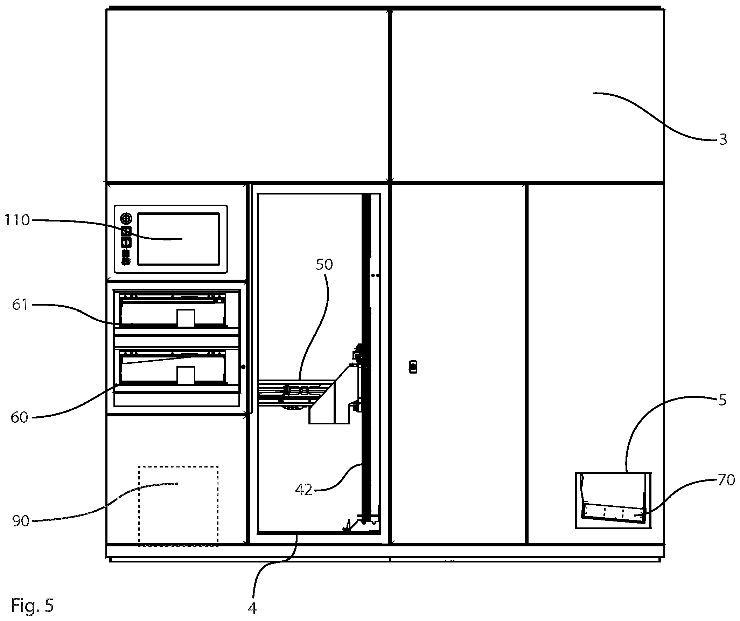

Figur 5 zeigt eine Vorderansicht der erfindungsgemäßen Kommissioniervorrichtung. Wie bei dieser Vorderansicht erkennbar ist, sind die beiden Einlagerungseinrichtungen 60, 61 übereinander unterhalb einer Anzeigeeinrichtung 110 angeordnet. Über die Anzeigeeinrichtung 110 können eine Vielzahl von Informationen über die Kommissioniervorrichtung angezeigt werden, und die Anzeigeeinrichtung 110 ist mit einer (nicht dargestellten) Eingabeeinrichtung gekoppelt. Unterhalb der Einlagerungseinrichtungen 60, 61 ist die Steuereinrichtung 90 angedeutet, die bei der gezeigten Ansicht durch einen Teil der Verkleidung 3 der Kommissioniervorrichtung verdeckt ist. Die Steuereinrichtung 90 ist u.a. mit den Einlagerungseinrichtungen, der Auslagerungseinrichtung, der Anzeigeeinrichtung sowie dem Bediengerät 40 gekoppelt.

In der Vorderseite der Kommissioniervorrichtung ist eine Türöffnung 4 vorgesehen, über welche die Kommissioniervorrichtung im Störfall oder zu Wartungszwecken betreten werden kann. Ferner ist in der Vorderseite der Kommissioniervorrichtung eine weitere Öffnung 5 vorgesehen, durch welche sich ein Teil der Auslagerungseinrichtung 70 erstreckt, d. h. durch welche Stückgüter aus der Kommissioniervorrichtung bewegt werden.

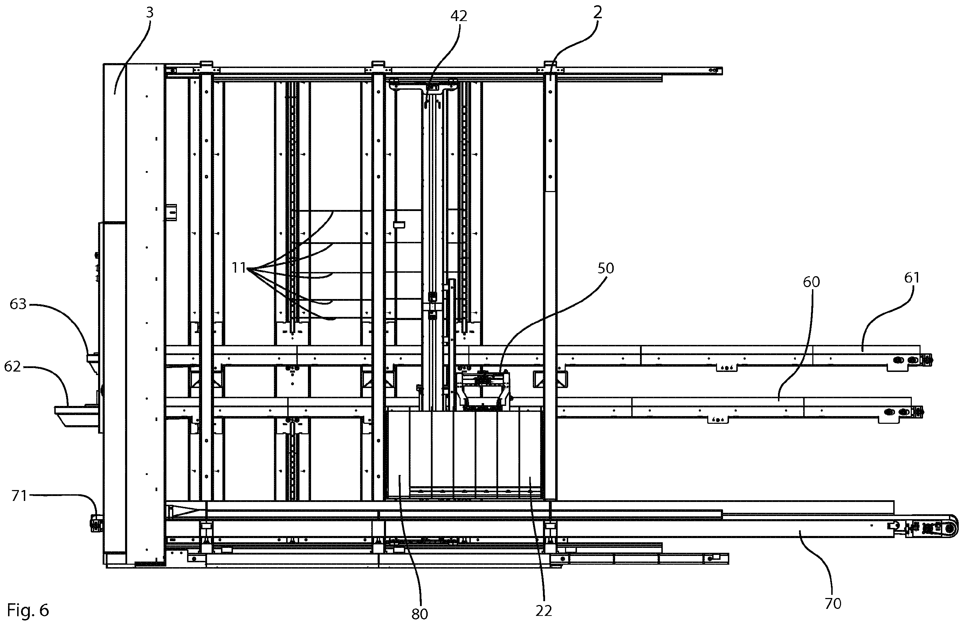

Figur 6 zeigt eine Seitenaussicht der bereits in den vorhergehenden Figuren dargestellten Ausführungsform der erfindungsgemäßen Kommissioniervorrichtung, wobei auch bei dieser Darstellung unwesentliche Bauteile fortgelassen sind. In der hinten angedeuteten ersten Regalreihe sind bei dieser Darstellung zwei nebeneinander liegende Regale mit horizontalen Regalböden 11 bestückt, und es ist zu erkennen, dass der Abstand zwischen den einzelnen Regalböden auch innerhalb eines Regales variieren kann. Ferner ist zu erkennen, dass die beiden Einlagerungseinrichtungen 61, 60 sowie die Auslagerungseinrichtung 70 über die Vorderseite der Einrichtung hinausragen, und in einem Entnahmebereich 71 und zwei Auflagebereichen 62, 63 enden.

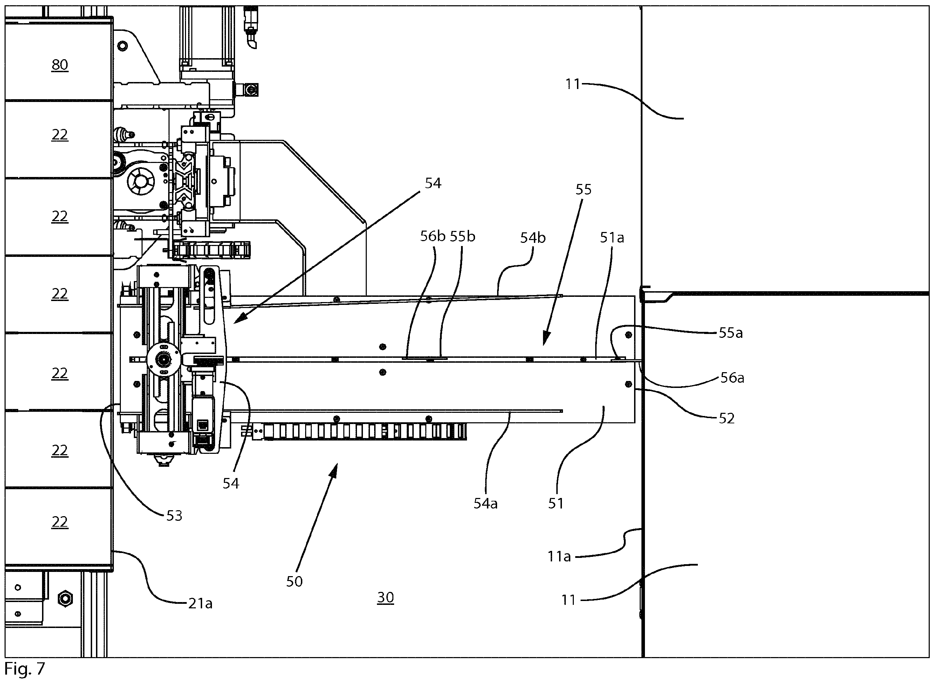

Figur 7 zeigt eine Detailansicht der Greifvorrichtung 50 des Bediengerätes 40 sowie die Anordnung der Greifvorrichtung zwischen der ersten (rechts) und der zweiten (links) Regalreihe, wobei von den Regelreihen die Regalböden 11, 21 zu erkennen sind. Die Greifvorrichtung 50 des Bediengerätes umfasst eine Auflagefläche 51, die bei der gezeigten Ausführungsform durch einen einfachen Auflagetisch bereitgestellt wird. An entgegengesetzten Stirnseiten der Auflagefläche sind zwei Ladekanten 52, 53 angeordnet, die kurz vor den Stirnkanten / Ladekanten der jeweiligen Regalböden 11, 21 der ersten und zweiten Regalreihe enden, d. h. die Gasse 30 zwischen der ersten und der zweiten Regalreihe ist fast vollständig überbrückt, die Bewegungsfreiheit des Bediengeräts in der Gasse aber gewährleistet. Eine entsprechende Ausgestaltung des Auflagetisches und der Auflagefläche erlaubt es, Stückgüter von den horizontalen Regalböden zu entnehmen und diese auf der Auflagefläche bzw. über die Auflagefläche direkt in einen geneigten Schacht 22 zu schieben, ohne dass eine Bewegung des Auflagetisches oder der Greifvorrichtung zu einer der Regalreihen erforderlich ist.

Zum Entnehmen und Bewegen der Stückgüter umfasst die Greifvorrichtung 50 einen Greifer 54, der bei der gezeigten Ausführungsform als Backengreifer mit zwei Greifbacken 54a, 54b ausgebildet ist, wobei zumindest eine der beiden Greifbacken 54b des Greifers derart schwenkbar ist, dass Stückgüter zwischen den Greifbacken 54a, 54b eingeklemmt werden können und so von einem horizontalen Regalboden 11 auf die Auflagefläche 51 der Greifvorrichtung gezogen werden können. Dazu ist der Greifer so ausgebildet, dass die Greifbacken in ein Regal eingeschoben werden können, wobei die Einschubtiefe in das Regal davon abhängig ist, wie viele Stückgüter von dem entsprechenden Regalboden entnommen werden solle.

Um die Stückgüter von der Auflagefläche 51 in die geneigten Lagerschächte 22 bewegen zu können, umfasst die Greifvorrichtung 50 bei der gezeigten Ausführungsform ferner eine Schiebeeinrichtung 55, die zwei Schiebemittel 55a, 55b umfasst, die in einer Ausnehmung 51a der Auflagefläche bewegbar sind. Ferner sind die Schiebemittel 55a, 55b bei der gezeigten Ausführungsform derart angeordnet, dass diese unter die Ebene der Auflagefläche bewegt werden können. Wie dies bei dem Schiebemittel 55a zu erkennen ist, umfassen diese einen Schiebefinger 56a, 56b, welcher über eine jeweils zugeordnete Ladekante bewegt werden kann. Das heißt im Hinblick auf den Schiebefinger 56a, welcher der Ladekante 52 zugeordnet ist, dass der Schiebefinger über die Ladekante 52 bewegt werden kann. Dies ist insbesondere im Hinblick darauf wichtig, dass Stückgüter derart auf die horizontalen Regalböden geschoben werden können, dass diese nicht über die vordere Ladekante 11a der horizontalen Regalböden hervorstehen.

Bei dem Schiebemittel 55b, welches der Ladekante 53 zugeordnet ist, die wiederum der zweiten Regalreihe zugeordnet ist, sorgt der über die Ladekante 53 bewegbare Schiebefinger 56b dafür, dass auf der Auflagefläche 51 aufliegende Stückgüter derart in einen Lagerschacht geschoben werden können, dass der Schwerpunkt eines Stückgutes über die Ladekante 21a des geneigten Regalbodens 21 geschoben wird, so dass sichergestellt ist, dass die Stückgüter schwerkraftbedingt den geneigten Lagerschacht bis zu der (in dieser Darstellung nicht gezeigten) Sperre oder einem bereits in dem Lagerschacht angeordneten Stückgut rutschen.

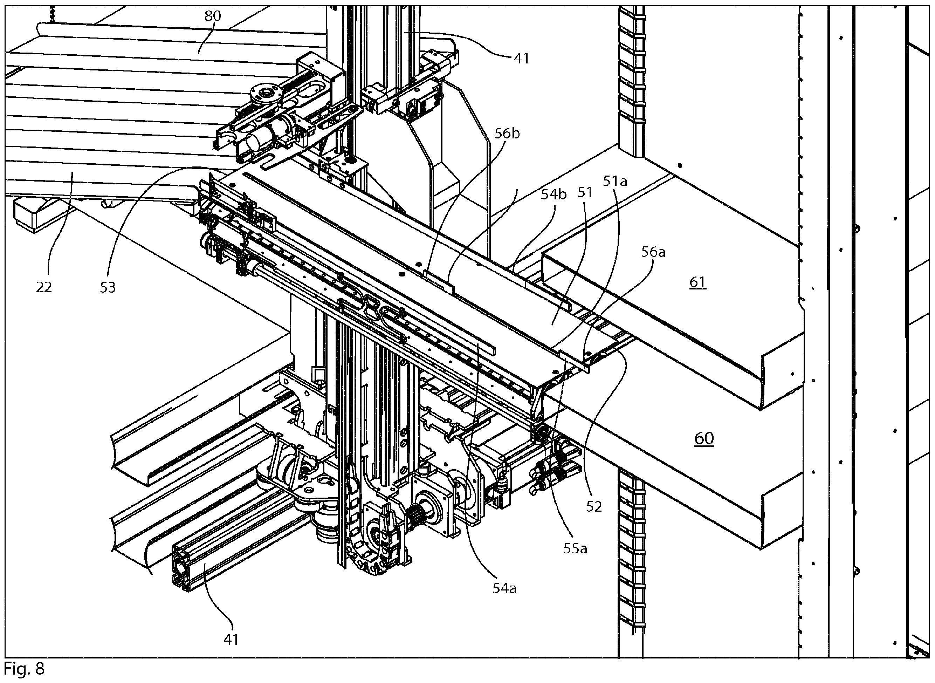

Figur 8 zeigt eine weitere Detailansicht der Greifvorrichtung 50, bei welcher insbesondere zu erkennen ist, dass die Schiebemittel 55a, 55b innerhalb einer Ausnehmung 51a der Auflagefläche 51 bewegbar sind. Bei dieser Darstellung ist auch zu erkennen, dass der Schiebefinger 56a des Schiebemittels 55a über die Ladekante 52 bewegbar ist.

Bei Figur 8 ist die Greifvorrichtung 50 des Bediengerätes derart angeordnet, dass Stückgüter von der Einlagerungseinrichtung 60 entnommen werden können, wozu die Schiebemittel 55a, 55b selbstverständlich unter die Ebene der Auflagefläche zu bewegen sind. Die Anordnung und Darstellung der Schiebemittel bei Figur 8 dient lediglich darstellerischen Gründen; während des Betriebes der Kommissioniervorrichtung ist eine derartige Anordnung der Schiebemittel nicht vorgesehen.

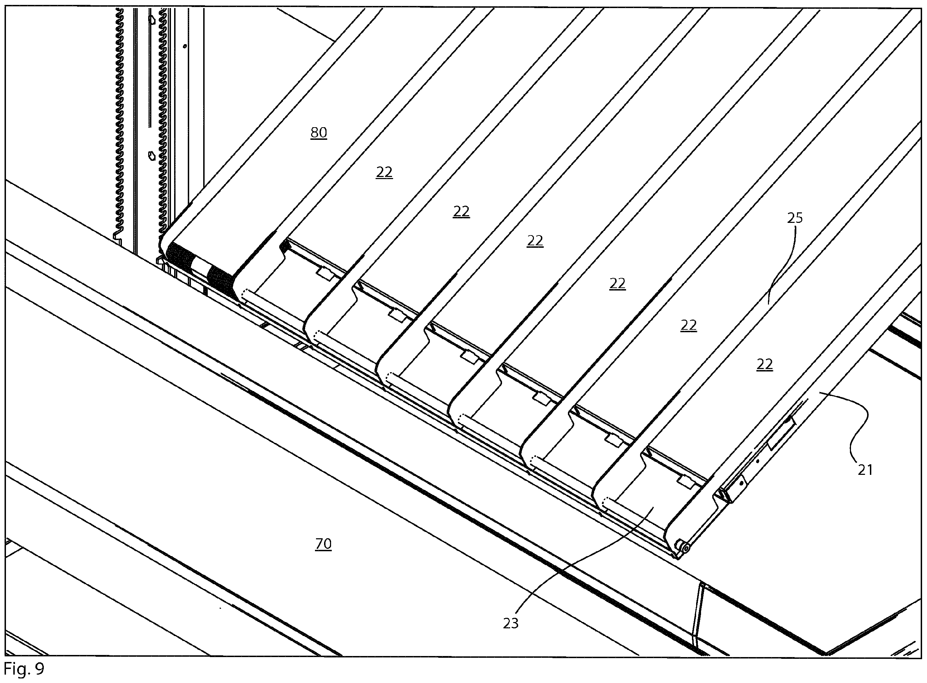

Figur 9 zeigt eine Detailansicht einer Mehrzahl von geneigten Lagerschächten 22, die auf einem geneigten Regalboden 21 ausgebildet sind. Die einzelnen Lagerschächte 22 sind durch Trennwände 25 voneinander separiert, die parallel zueinander auf den geneigten Regalboden 21 angeordnet sind. An dem unteren Ende eines jeden geneigten Lagerschachtes 22 ist eine Sperre 23 angeordnet, die es erlaubt, dass einzelne Stückgüter aus den geneigten Lagerschächten ausgelagert werden können. Bedingt durch die Anordnung der geneigten Lagerschächte und der Auslagerungseinrichtung 70 fallen die aus einem Lagerschacht ausgelagerten Stückgüter auf die Auslagerungseinrichtung 70 und werden mit dieser durch eine Öffnung in der Vorderseite der Kommissioniervorrichtung ausgelagert.

Auf dem dargestellten geneigten Regalboden 21 ist ferner die Hilfs-Auslagerungseinrichtung 80 angeordnet, über welche insbesondere Regalgüter von den horizontalen Regalböden ausgelagert werden können. Bei alternativen Ausführungsformen kann die Hilfs-Auslagerungseinrichtung zwei oder mehr Lagerschachtbreiten umfassen oder als separates Bauteil beispielsweise neben der zweiten Regalreihe angeordnet sein. Die Hilfs-Auslagerungseinrichtung wie hier gezeigt ist eine passive Auslagerungseinrichtung, d.h. die Stückgüter werden nicht durch eine Bewegung der Auslagerungseinrichtung selber bewegt. Alternativ kann auch vorgesehen sein, die Hilfs-Auslagerungseinrichtung als aktive Auslagerungseinrichtung zu gestalten, beispielsweise als Förderband, das ggf. auch direkt aus der Kommissioniervorrichtung geführt sein kann.

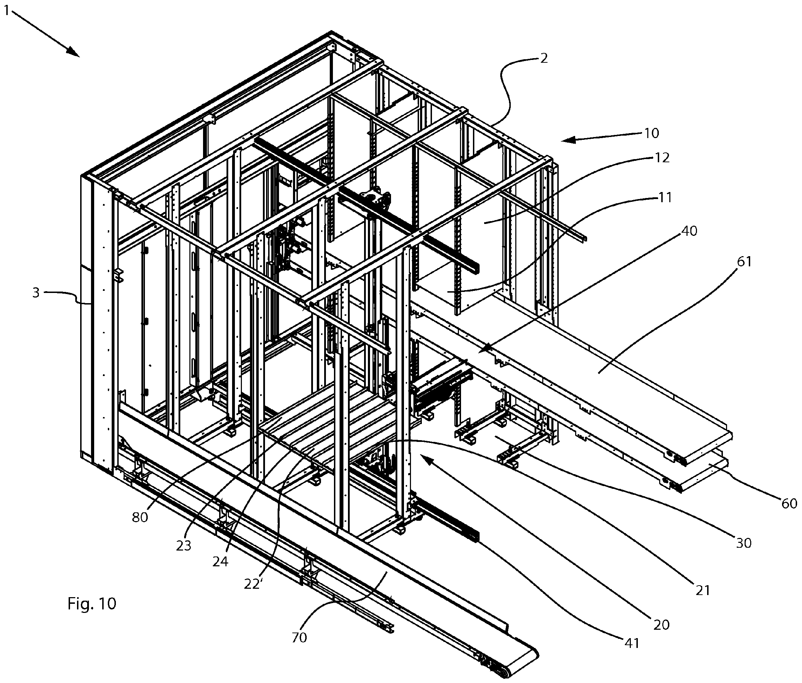

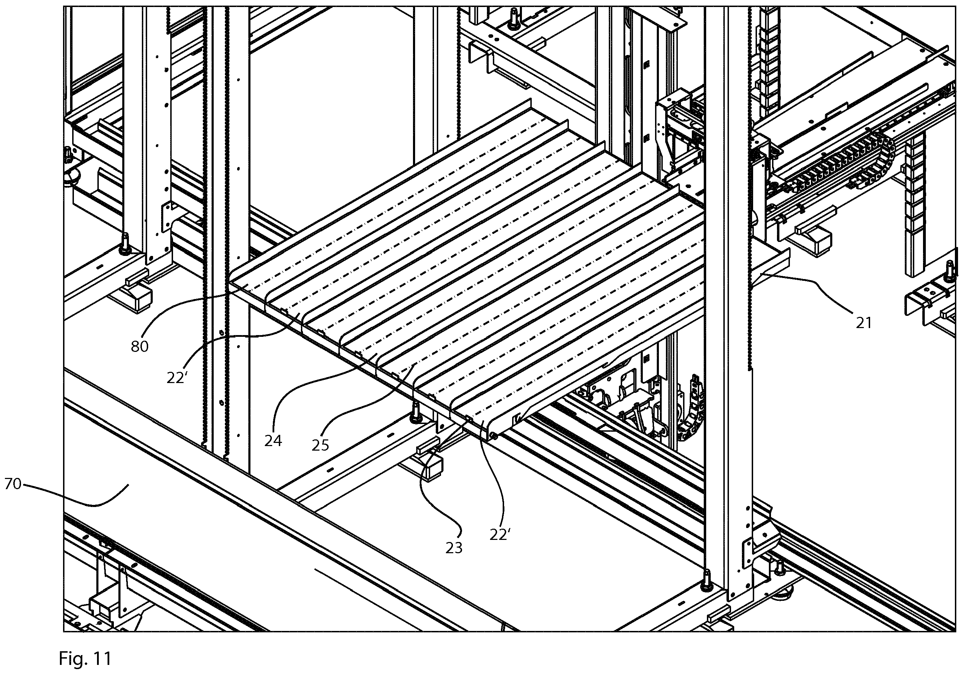

Figur 10 zeigt eine perspektivische Ansicht einer zweiten Ausführungsform, wobei bei dieser Ausführungsform horizontale Lagerschächte 22' verwendet werden; die weiteren Bauteile entsprechen weitgehend denen der ersten Ausführungsform, so dass auf eine detaillierte Beschreibung verzichtet wird. Figur 11 zeigt eine Detailansicht eines Regalbodens eines Regals der zweiten Regalreihe 20 der zweiten Ausführungsform, bei welcher die Regalböden 21 horizontal ausgeführt sind. Bei ihren Enden 24 sind Sperren 23 angeordnet, wobei jedem Lagerschacht 22' eine Sperre 23 zugeordnet ist, die separat über die Steuereinrichtung angesteuert werden kann.

Bei dieser Ausführungsform umfasst die zweite Regalreihe 20 eine Fördereinrichtung 25, mit welcher Stückgüter in den Lagerschächten 22' bewegt werden können. Bei der gezeigten Ausführungsform ist die Fördereinrichtung 25 als Förderband unten den Böden der Lagerschächte ausgebildet, wobei die Böden der Lagerschächte eine Ausnehmung aufweisen, durch welche ein Abschnitt der Fördereinrichtung zumindest abschnittsweise ragt, so dass ein Kontakt zwischen eingelagerten Stückgütern und der Fördereinrichtung besteht. Soll ein Stückgut ausgelagert werden, wird eine Sperre 23 (oder mehrere Sperren) geöffnet und die Fördereinrichtung betätigt. Die Fördereinrichtung wirkt sich auf sämtliche Lagerschächte des Regalbodens aus, wobei jedoch bei Lagerschächten mit nicht geöffneten Sperren die Stückgüter lediglich gegen die Sperren gefahren aber nicht ausgelagert werden.

Zum Auslagern von Stückgütern stehen weitere, dem Fachmann bekannte Methoden zur Verfügung. So kann jedem Lagerschacht eine Fördereinrichtung zugeordnet sein, welche auch als Schieber ausgebildet sein kann, d.h. die Stückgüter aus einem Schacht ausgeschoben werden.

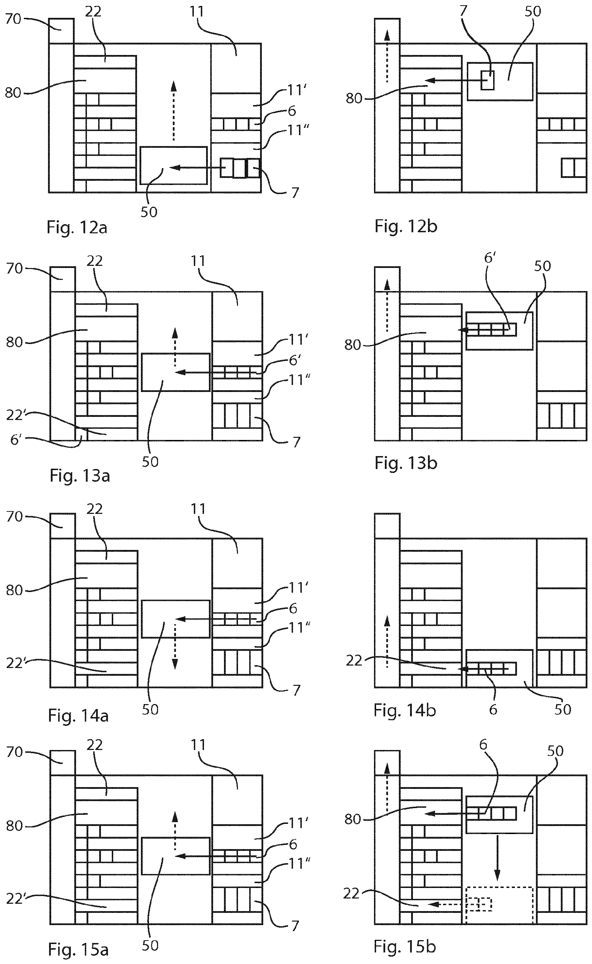

Nachfolgend werden einige Ausführungsformen des erfindungsgemäßen Verfahrens unter Bezugnahme auf die Figuren 12a, 12b - 15a, 15b beschrieben, die jeweils schematisch unterschiedliche Verfahrensabschnitte darstellen. Die Figuren sind stark vereinfacht und es werden lediglich die wesentlichen Merkmale gezeigt und beschrieben.

Figuren 12a und 12b zeigen schematisch zwei Stadien einer ersten Ausführungsform des Verfahrens. Erfindungsgemäß wird zunächst in Reaktion auf eine Auslageranforderung von der Steuereinrichtung ermittelt, ob es sich bei dem zumindest einen auszulagernden Stückgut um ein Schachtgut oder ein Regalgut handelt. Bei dem in den Figuren 10a, 10b gezeigten Ausführungsbeispiel wird per Auslageranforderung ein auf dem horizontalen Regalboden 11" lagerndes Regalgut 7 angefordert. Daraufhin wird die Greifvorrichtung 50 zu dem horizontalen Regalboden 11" bewegt. Sobald die Greifvorrichtung 50 entsprechend positioniert ist, wird das betreffende Stückgut ergriffen und auf die Auflagefläche bewegt. Die Greifvorrichtung wird zu der Hilfs-Auslagerungseinrichtung 80 bewegt und sobald die Greifvorrichtung 50 entsprechend positioniert ist, wird das Stückgut 7 auf die Hilfs-Auslagerungseinrichtung 80 geschoben und gelangt von dieser auf die Auslagerungseinrichtung 70, über welche das Stückgut aus der Kommissioniervorrichtung bewegt wird.

Bei der in den Figuren 13a und 13b veranschaulichten Ausführungsform betrifft die Auslageranforderung vier Schachtgüter. Diese Art Stückgut ist üblicherweise in dem geneigten Schacht 22' gelagert. Mittels der Steuereinrichtung wird jedoch festgestellt, dass lediglich ein Stückgut 6' in dem geneigten Schacht 22' vorhanden ist. Die Greifvorrichtung wird dann zu dem Regalboden 11' bewegt, wo vier der Auslageranforderung entsprechende Stückgüter als Übervorrat gelagert sind. Mit der Greifvorrichtung werden alle vier Stückgüter 6' ergriffen. Da ermittelt wurde, dass in dem geneigten Lagerschacht 22' lediglich ein Stückgut 6' vorhanden ist, die Auslageranforderung aber vier Stückgüter umfasst, wird die Greifvorrichtung 50 zu der Hilfs-Auslagerungseinrichtung 80 bewegt, und es werden sämtliche auf der Greifvorrichtung 50 befindlichen Stückgüter 6' über die Hilfs-Auslagerungseinrichtung 80 und die Auslagerungseinrichtung 70 ausgelagert.

Bei der in den Figuren 14a und 14b gezeigten Ausführungsform umfasst die Auslageranforderung zwei Stückgüter, die üblicherweise in dem geneigten Lagerschacht 22' gelagert sind. Mittels der Steuereinrichtung wird jedoch festgestellt, dass der geneigte Lagerschacht 22' leer ist. Mittels der Greifvorrichtung 50 werden vier der Auslageranforderung entsprechende Stückgüter 6 von dem horizontalen Regalboden 11' entnommen. Im Anschluss daran wird die Greifvorrichtung vor dem geneigten Lagerschacht 22' bewegt und es werden sämtliche auf der Greifvorrichtung 50 aufliegenden Stückgüter 6 in den geneigten Schacht 22' bewegt. Da die Auslageranforderung jedoch nur zwei Stückgüter 6 umfasst, werden lediglich zwei Stückgüter ausgelagert, die anderen beiden verbleiben in dem geneigten Lagerschacht 22'.

Bei einer alternativen, in den Figuren 15a und 15b veranschaulichten Ausführungsform werden wieder zwei Stückgüter 6 angefordert, und es wird wiederum ermittelt, dass kein der Auslageranforderung entsprechendes Stückgut in dem geneigten Lagerschacht 22' angeordnet ist. Daraufhin werden vier Stückgüter 6 mit der Greifvorrichtung 50 von dem horizontalen Regalboden 11' ergriffen. Anders als bei dem vorhergehenden Ausführungsbeispiel wird die Greifvorrichtung jedoch zunächst zu der Hilfs-Auslagerungseinrichtung 80 bewegt und es werden zwei der vier auf der Greifvorrichtung 50 befindlichen Stückgüter über die Hilfs-Auslagerungseinrichtung ausgelagert. Mit den verbleibenden zwei Stückgütern wird die Greifvorrichtung 50 zu dem geneigten Lagerschacht 22' bewegt und die verbleibenden beiden Stückgüter werden in den geneigten Lagerschacht bewegt, wo sie bis zu einer zutreffenden nächsten Auslageranforderung verbleiben.

Welche Variante des erfindungsgemäßen Verfahrens verwendet wird hängt von der Auslastung des Bediengeräts und der Lagersituation ab. In jedem Fall wird die für die aktuelle Auslageranforderung optimale Auslagervariante von der Steuereinrichtung ermittelt.

## Patentansprüche

1. Kommissioniervorrichtung für Stückgüter, mit zumindest einer ersten Regalreihe (10) mit mindestens einem ersten Regal mit einer Mehrzahl von übereinander angeordneten, sich jeweils in einer horizontalen Ebene erstreckenden Regalböden (11),
zumindest einer zweiten Regalreihe (20) mit mindestens einem zweiten Regal mit einer Mehrzahl von übereinander angeordneten, sich jeweils in einer Ebene erstreckenden Regalböden (21),
einer zwischen der ersten und der zweiten Regalreihe (10, 20) gebildeten Gasse (30), in der ein Bediengerät (40) horizontal und vertikal verfahrbar ist,
zumindest einer Einlagerungseinrichtung (60, 61), mit welcher Stückgüter in die Kommissioniervorrichtung bewegt werden und von welcher das Bediengerät Stückgüter entnehmen kann, zumindest einer Auslagerungseinrichtung (70), über welche Stückgüter aus der zweiten Regalreihe (20) ausgelagert werden können, und zumindest einer Hilfs-Auslagerungseinrichtung (80), über welche von dem Bediengerät (40) aufgenommene Stückgüter entlang eines Hilfs-Auslagerungspfads ausgelagert werden können,
wobei auf jedem Regalboden (21) der zweiten Regalreihe mehrere parallele Lagerschächte (22, 22') ausgebildet sind, die an ihren Enden (24) jeweils eine Sperre (23) zum Halten und Freigeben von in dem Lagerschacht (22, 22') liegenden Stückgütern aufweisen und aus welchen Stückgüter entlang eines Haupt-Auslagerungspfades über die Auslagerungseinrichtung (70) ausgelagert werden können,
wobei das Bediengerät (40) eine Greifvorrichtung (50) zum Ein- und/oder Auslagern von Stückgütern auf die bzw. von den horizontalen Regalböden (11) und Einfüllen in die Lagerschächte (22, 22') umfasst,
und einer mit dem Bediengerät (40) gekoppelten Steuereinrichtung (90), die das Bediengerät (40) zum Einlagern und Auslagern von Stückgütern ansteuert, wobei die Steuereinrichtung (90) derart ausgebildet ist, dass das Bediengerät zum Auslagern von einem oder mehreren auf den horizontalen Regalböden (11) angeordneten Stückgütern und Übergeben dieser Stückgüter an die Hilfs-Auslagerungseinrichtung (80) ansteuerbar ist, **dadurch gekennzeichnet, dass** die Steuereinheit (90) zusätzlich derart ausgebildet ist, dass das Bediengerät (40) zum Auslagern von hintereinanderliegenden gleichartigen Stückgütern von den horizontalen Regalböden (11) und Einlagern dieser Stückgüter in den Lagerschächten (22) ansteuerbar ist.

2. Kommissioniervorrichtung nach Anspruch 1, **dadurch gekennzeichnet, dass** die Regalböden (21) der zweiten Regalreihe (20) von der Gasse (30) weg abfallend geneigt ausgebildet sind.

3. Kommissioniervorrichtung nach Anspruch 1 oder 2, **dadurch gekennzeichnet, dass** die Greifvorrichtung (50) eine horizontale Auflagefläche (51) mit einander entgegengesetzten Ladekanten (52, 53), einen Greifer (54a, 54b) zum Ein- und Auslagern von Stückgütern auf die bzw. von den horizontalen Regalböden (11) und eine Schiebeeinrichtung (55) zum Schieben von Stückgütern auf der Auflagefläche aufweist, wobei zwischen den Ladekanten (52, 53) ein Transportweg für Stückgüter gebildet ist und wobei die Auflagefläche (51) die gesamte Breite der Gasse (30) überspannt.

4. Kommissioniervorrichtung nach Anspruch 3, **dadurch gekennzeichnet, dass** die Schiebeeinrichtung (55) zwei Schiebemittel (55a, 55b) umfasst, mit welchen Stückgüter in entgegengesetzten Richtungen auf der Auflagefläche (51) bewegt werden können.

5. Kommissioniervorrichtung nach Anspruch 4, **dadurch gekennzeichnet, dass** die Schiebemittel (55a, 55b) in einer Ausnehmung (51a) der Auflagefläche (51) und unter diese bewegbar sind.

6. Kommissioniervorrichtung nach Anspruch 4 oder 5, **dadurch gekennzeichnet, dass** ein Schiebemittel (55a, 55b) einen Schiebefinger (56a, 56b) aufweist, welcher über eine Ladekante (52, 53) bewegt werden kann.

7. Kommissioniervorrichtung nach einem der Ansprüche 1 - 6, **dadurch gekennzeichnet, dass** die geneigten Regalböden (21) der zweiten Regalreihe (20) derart angeordnet sind, dass Lagerschächte (22, 22') unterschiedlicher Höhe ausgebildet sind.

8. Kommissioniervorrichtung nach einem der Ansprüche 1-7, **dadurch gekennzeichnet, dass** die Hilfs-Auslagerungseinrichtung (80) auf einem Regalboden (21) der zweiten Regalreihe (20) ausgebildet ist.

9. Kommissioniervorrichtung nach Anspruch 8, **dadurch gekennzeichnet, dass** die Hilfs-Auslagerungseinrichtung (80) als Lagerschacht ohne Sperre ausgebildet ist.

10. Verfahren zum Auslagern von Stückgütern aus einer Kommissioniervorrichtung nach einem der Ansprüche 1 - 9, wobei
in Reaktion auf eine Auslageranforderung von der Steuereinrichtung ermittelt wird, ob es sich bei dem zumindest einen auszulagernden Stückgut um ein Schachtgut (6) oder ein Regalgut (7) handelt,
für den Fall, dass es sich um ein Regalgut handelt, eine der Auslageranforderung entsprechende Anzahl von Stückgütern mit dem Bediengerät ergriffen und der Hilfs-Auslagerungseinrichtung übergeben wird,
**dadurch gekennzeichnet, dass** für den Fall, dass es sich um Schachtgut handelt, ermittelt wird, ob noch eine entsprechende Anzahl von Stückgütern in den Lagerschächten gelagert ist, und,
für den Fall, dass eine entsprechende Anzahl in den Lagerschächten gelagert ist, eine der Auslagerungsanforderung entsprechende Anzahl von Stückgütern auf die Auslagerungseinrichtung ausgelagert und über diese aus der Vorrichtung bewegt wird, oder,
für den Fall, dass eine entsprechende Anzahl nicht in den Lagerschächten gelagert ist, eine Mehrzahl von auf horizontalen Regalböden gelagerten, der Auslageranforderung entsprechenden Stückgütern mit dem Bediengerät ergriffen wird, und
eine der Auslageranforderung entsprechende Anzahl Stückgüter ausgelagert wird.

11. Verfahren nach Anspruch 10, **dadurch gekennzeichnet, dass** die nicht in den Lagerschächten gelagerten Stückgüter ausgelagert werden, indem
das Bediengerät zu der Hilfs-Auslagerungseinrichtung bewegt wird,
eine der Auslageranforderung entsprechende Anzahl Stückgüter an die Hilfs-Auslagerungseinrichtung übergeben und ausgelagert wird.

12. Verfahren nach Anspruch 10, **dadurch gekennzeichnet, dass** die nicht in den Lagerschächten gelagerten Stückgüter ausgelagert werden, indem
das Bediengerät zu einem Lagerschacht bewegt wird, sämtliche Stückgüter in den Lagerschacht übergeben werden, die Sperre des geneigten Lagerschachts bzw. der geneigten Lagerschächte derart betätigt wird, dass eine der Auslageranforderung entsprechende Anzahl an Stückgütern auf die Auslagerungseinrichtung ausgelagert werden kann.

## Claims

1. A picking device for packaged goods having at least a first row of racks (10) with at least a first rack with a plurality of shelves (11) arranged one on top of the other, each extending in a horizontal plane,
at least a second row of racks (20) with at least a second rack with a plurality of shelves (21) arranged one on top of the other, each extending in a plane,
a lane (30) formed between the first and second row of racks (10, 20) in which an operating unit (40) can be moved horizontally and vertically,
at least one storage admission device (60, 61) with which packaged goods are moved into the picking device and from which the operating unit can take packaged goods, at least one storage removal device (70) by means of which packaged goods can be removed from the second row of racks (20) and at least one auxiliary storage removal device (80) by means of which packaged goods received from the operating unit (40) can be removed from storage along an auxiliary storage removal path,
wherein on each shelf (21) of the second row of racks a plurality of parallel storage shafts (22, 22') is formed which each have at their ends (24) a barrier (23) for holding back and releasing packaged goods arranged in the storage shaft (22, 22') and from which packaged goods can be removed from storage along a main storage removal path by means of the storage removal device (70),
wherein the operating unit (40) comprises a grab device (50) for the admission to storage of packaged goods and/or the removal from storage of packaged goods from the horizontal shelves (11) and for channelling into the storage shafts (22, 22'),
and a control device (90) coupled with the operating unit (40) which controls the operating unit (40) for the admission to storage and removal from storage of packaged goods,
wherein the control device (90) is configured in such a manner that the operating unit is controllable for the removal from storage of one or a plurality of packaged goods arranged on the horizontal shelves (11) and the transfer of said packaged goods to the auxiliary storage removal device (80), **characterized in that** the control unit (90) is additionally configured in such a manner that the operating unit (40) is controllable for the removal from storage of identical packaged goods arranged one behind the other from the horizontal shelves (11) and the admission to storage of these packaged goods in the storage shafts (22).

2. The picking device according to claim 1, **characterized in that** the shelves (21) of the second row of racks (20) are configured on a slope falling away from the lane (30).

3. The picking device according to claim 1 or 2, **characterized in that** the grab device (50) has a horizontal bearing surface (51) with opposite loading edges (52, 53), a grab (54a, 54b) for the admission to storage and removal from storage of packaged goods on or from the horizontal shelves (11) and a pushing device (55) for pushing packaged goods onto the bearing surface, wherein between the loading edges (52, 53) is formed a transport path for packaged goods and wherein the bearing surface (51) spans the entire width of the lane (30).

4. The picking device according to claim 3, **characterized in that** the pushing device (55) comprises two pushing means (55a, 55b) with which packaged goods can be moved in opposite directions on the bearing surface (51).

5. The picking device according to claim 4, **characterized in that** the pushing means (55a, 55b) are movable in a recess (51a) in the bearing surface (51) and below said bearing surface.

6. The picking device according to claim 4 or 5, **characterized in that** a pushing means (55a, 55b) has a pushing finger (56a, 56b) which can be moved via a loading edge (52, 53).

7. The picking device according to one of claims 1 - 6, **characterized in that** the sloping shelves (21) of the second row of racks (20) are arranged in such a manner that storage shafts (22, 22') of different heights are formed.

8. The picking device according to one of claims 1 - 7, **characterized in that** the auxiliary storage removal device (80) is formed on a shelf (21) of the second row of racks (20).

9. The picking device according to claim 8, **characterized in that** the auxiliary storage removal device (80) is configured as a storage shaft without a barrier.

10. A method of removing packaged goods from storage comprising a picking device according to one of claims 1 - 9, wherein
in response to a storage removal request from the control device, a determination is made as to whether the at least one packaged good to be removed from storage is a shaft good (6) or a rack good (7),
in the event that it is a rack good, a number of packaged goods corresponding to the storage removal request is grabbed using the operating unit and transferred to the auxiliary storage removal device, **characterized in that** in the event that it is a shaft good, a determination is made as to whether a corresponding number of packaged goods is stored in the storage shafts and,
in the event that a corresponding number is stored in the storage shafts, a number of packaged goods corresponding to the storage removal request is removed from storage onto the storage removal device and moved by means of this from the device or,
in the event that a corresponding number is not stored in the storage shafts, a plurality of packaged goods stored on the horizontal shelves and corresponding to the storage removal request is grabbed and
a number of packaged goods corresponding to the storage removal request is removed from storage.

11. The method according to claim 10, **characterized in that** the packaged goods not stored in the storage shafts are removed from storage, **in that**
the operating unit is moved to the auxiliary storage removal device,
a number of packaged goods corresponding to the storage removal request is transferred to the auxiliary storage removal device and removed from storage.

12. The method according to claim 10, **characterized in that** the packaged goods not stored in the storage shafts are removed from storage, **in that**
the operating device is moved to a storage shaft,
all packaged goods are transferred to the storage shaft,
the barrier on the sloping storage shaft or the sloping storage shafts is actuated in such a manner that a number of packaged goods corresponding to the storage removal request can be removed from storage onto the storage removal device.

## Revendications

1. Dispositif de préparation de commandes pour des marchandises en vrac, comprenant
au moins une première rangée d'étagères (10) avec au moins une première étagère comprenant une pluralité de fonds d'étagère (11) disposés les uns au-dessus des autres et s'étendant respectivement dans un plan horizontal,
au moins une deuxième rangée d'étagères (20) avec au moins une deuxième étagère comprenant une pluralité de fonds d'étagère (21) disposés les uns au-dessus des autres et s'étendant respectivement dans un plan incliné,
une allée (30) formée entre les première et deuxième rangées d'étagères (10, 20), dans laquelle un appareil de commande (40) peut être déplacé horizontalement et verticalement,
au moins un dispositif d'emplacement (60, 61) avec lequel des marchandises en vrac sont déplacées dans le dispositif de préparation de commandes et à partir duquel l'appareil de commande peut retirer des marchandises en vrac, au moins un dispositif de transfert (70) par lequel des marchandises en vrac peuvent être transférées à partir de la deuxième rangée d'étagères (20), et au moins un dispositif de transfert auxiliaire (80) par lequel des marchandises en vrac collectées par l'appareil de commande (40) peuvent être transférées le long d'une voie de transfert auxiliaire,
dans lequel, plusieurs cages de stockage (22, 22') parallèles sont formées sur chaque fond d'étagère (21) de la deuxième rangée d'étagères, lesquelles présentent respectivement un verrou (23) à leurs extrémités (24), pour le maintien et la libération de marchandises en vrac situées dans la cage de stockage (22, 22') et à partir desquelles des marchandises en vrac peuvent être transférées le long d'une voie de transfert principale par le dispositif de transfert (70),
dans lequel l'appareil de commande (40) comporte un dispositif de préhension (50) pour l'emplacement et/ou le transfert de marchandises en vrac sur les fonds d'étagère horizontaux (11) ou à partir de ceux-ci et pour le remplissage dans les cages de stockage (22, 22'),
et un dispositif de commande (90) accouplé à l'appareil de commande (40), lequel actionne l'appareil de commande (40) pour l'emplacement et le transfert de marchandises en vrac,
dans lequel le dispositif de commande (90) est formé de telle façon que l'appareil de commande peut être actionné pour transférer une ou plusieurs des marchandises en vrac disposées sur les fonds d'étagère horizontaux (11) et pour remettre ces marchandises en vrac au dispositif de transfert auxiliaire (80), **caractérisé en ce que** le dispositif de commande (90) est en outre conçu de telle façon que l'appareil de commande (40) peut être actionné pour transférer des marchandises en vrac similaires disposées les unes à la suite des autres à partir des fonds d'étagère horizontaux (11) et pour placer ces marchandises en vrac dans les cage de stockage (22).

2. Dispositif de préparation de commandes selon la revendication 1, **caractérisé en ce que** les fonds d'étagère (21) de la deuxième rangée d'étagères (20) sont formés inclinés vers le bas en s'écartant de l'allée (30).

3. Dispositif de préparation de commandes selon la revendication 1 ou 2, **caractérisé en ce que** le dispositif de préhension (50) présente une surface de support horizontale (51) avec des bords de chargement (52, 53) opposés les uns aux autres, un préhenseur (54a, 54b) pour l'emplacement et le transfert de marchandises en vrac sur les fonds d'étagère horizontaux (11) ou à partir de ceux-ci, et un dispositif de poussée (55) pour pousser des marchandises en vrac sur la surface de support, un chemin de transport pour des marchandises en vrac étant formé entre les bords de chargement (52, 53), et la surface de support (51) s'étendant sur toute la largeur de l'allée (30).

4. Dispositif de préparation de commandes selon la revendication 3, **caractérisé en ce que** le dispositif de poussée (55) comporte deux moyens de poussée (55a, 55b) avec lesquels des marchandises en vrac peuvent être déplacées dans des directions opposées sur la surface de support (51).

5. Dispositif de préparation de commandes selon la revendication 4, **caractérisé en ce que** les moyens de poussée (55a, 55b) peuvent être déplacés dans une cavité (51a) de la surface de support (51) et sous celle-ci.

6. Dispositif de préparation de commandes selon la revendication 4 ou 5, **caractérisé en ce qu'**un moyen de poussée (55a, 55b) présente un doigt de poussée (56a, 56b) apte à être déplacé par-dessus un bord de chargement (52, 53).

7. Dispositif de préparation de commandes selon l'une des revendications 1 - 6, **caractérisé en ce que** les fonds d'étagère inclinés (21) de la deuxième rangée d'étagères (20) sont disposés de manière à former des cages de stockage (22, 22') de différentes hauteurs.

8. Dispositif de préparation de commandes selon l'une des revendications 1 - 7, **caractérisé en ce que** le dispositif de transfert auxiliaire (80) est formé sur un fond d'étagère (21) de la deuxième rangée d'étagères (20).

9. Dispositif de préparation de commandes selon la revendication 8, **caractérisé en ce que** le dispositif de transfert auxiliaire (80) est conçu comme une cage de stockage sans verrou.

10. Procédé pour le transfert de marchandises en vrac à partir d'un dispositif de préparation de commandes selon l'une des revendications 1 - 9, dans lequel
en réaction à une demande de transfert venant du dispositif de commande, il est déterminé si l'au moins une marchandise en vrac à transférer est une marchandise de cage (6) ou une marchandise d'étagère (7),
dans le cas où il s'agit d'une marchandise d'étagère, un nombre de marchandises en vrac correspondant à la demande de transfert est saisi à l'aide de l'appareil de commande et remis au dispositif de transfert,
**caractérisé en ce que** dans le cas où il s'agit d'une marchandise de cage, il est déterminé si un nombre correspondant de marchandises en vrac se trouve encore dans les cages de stockage, et
dans le cas où un nombre correspondant se trouve dans les cages de stockage, un nombre de marchandises en vrac correspondant à la demande de transfert est transféré vers le dispositif de transfert et déplacé hors du dispositif par celui-ci, ou
dans le cas où un nombre correspondant ne se trouve pas dans les cages de stockage, une pluralité de marchandises en vrac correspondant à la demande de transfert et stockée sur des fonds d'étagère horizontaux est saisie à l'aide de l'appareil de commande, et
un nombre de marchandises en vrac correspondant à la demande de transfert est transféré.

11. Procédé selon la revendication 10, **caractérisé en ce que** les marchandises en vrac non stockées dans les cages de stockage sont transférées, par
un déplacement de l'appareil de commande vers le dispositif de transfert auxiliaire,
la remise d'un nombre de marchandises en vrac correspondant à la demande de transfert au dispositif de transfert auxiliaire et le transfert de celles-ci.

12. Procédé selon la revendication 10, **caractérisé en ce que** les marchandises en vrac non stockées dans les cages de stockage sont transférées, par
le déplacement de l'appareil de commande vers une cage de stockage,
la remise de toutes les marchandises en vrac dans la cage de stockage,
l'actionnement du verrou de la cage de stockage inclinée ou des cages de stockage inclinées, de telle façon qu'un nombre de marchandises en vrac correspondant à la demande de transfert peut être transféré sur le dispositif de transfert.
